# EUROPÄISCHE PATENTSCHRIFT

(11) **EP 1 160 049 B1**
(45) Veröffentlichungstag und Bekanntmachung des Hinweises auf die Patenterteilung: **29.07.2009**
(21) Anmeldenummer: 01109117.0
(22) Anmeldetag: 12.04.2001
(51) Int. Cl.: B23Q 11/08, B23Q 11/00

(54) **Werkzeugmaschine**
Machine tool
Machine-outil

(30) Priorität: 27.05.2000 DE 10026510
(43) Veröffentlichungstag der Anmeldung: 05.12.2001
(73) Patentinhaber: Gebr. Heller Maschinenfabrik GmbH, D-72622 Nürtingen (DE)
(72) Erfinder: Kurz, Artur, 73240 Wendlingen (DE)
(74) Vertreter: Jackisch-Kohl, Anna-Katharina

(56) Entgegenhaltungen:
- DE-A- 2 946 825
- DE-A- 4 319 906
- DE-A- 19 757 729
- SU-A- 569 432
- US-A- 2 417 671

## Beschreibung

Die Erfindung betrifft eine Werkzeugmaschine nach dem Oberbegriff des Anspruches 1.

Es sind Werkzeugmaschinen bekannt, bei denen der Arbeitsraum, in dem das Werkstück bearbeitet wird, von einem Rückraum durch Abdeckungen getrennt ist. Am verfahrbaren Ständer sind beiderseits Abdeckungen befestigt, die den Arbeitsraum vom Rückraum trennen und die beim Verfahren des Ständers mitgenommen werden. Die Abdeckungen sind in Form von faltenbalgartigen Wänden ausgebildet, die je nach Verfahrrichtung des Ständers zusammengefaltet oder auseinandergezogen werden. Solche Abdeckungen sind jedoch schmutzempfindlich, störanfällig und wenig beanspruchbar.

Es sind auch Werkzeugmaschinen bekannt, bei denen die beiden Abdeckungen im Rückraum mit einer Zugeinrichtung unmittelbar verbunden sind, so daß beide Abdeckungen in einem geschlossenen Kreis zusammen mit dem Ständer liegen.

Diese Anordnung hat den Nachteil, daß infolge des Kraftflusses das Ende einer Abdeckung jeweils die Zugkräfte aus Beschleunigung und Reibungswiderstand der anderen Abdeckung aufnehmen muß, wodurch sie zusätzlich auf Zug beansprucht wird. Dies bedingt höheren Verschleiß und kürze Lebensdauer aller betroffenen Bauteile.

Der Erfindung liegt die Aufgabe zugrunde, die gattungsgemäße Werkzeugmaschine so auszubilden, daß sie bei einfacher konstruktiver Gestaltung eine einwandfreie Abtrennung des Arbeitsraumes gegenüber dem Rückraum gewährleistet und die oben aufgeführten Nachteile vermeidet.

Diese Aufgabe wird bei der gattungsgemäßen Werkzeugmaschine erfindungsgemäß mit den kennzeichnenden Merkmalen des Anspruches 1 gelöst.

Bei der Werkzeugmaschine gemäß Anspruch 1 ist die eine Abdekkung im Rückraum mit dem zugehörigen Zugteil verbunden, das seinerseits mit seinem anderen Ende am Ständer befestigt ist. Die zweite Abdeckung ist somit ein von der ersten Abdeckung getrenntes Bauteil. Die Abdeckung ist nicht mehr faltenbalgförmig ausgebildet, so daß die damit zusammenhängenden Probleme nicht mehr auftreten.

Weitere Merkmale der Erfindung ergeben sich aus den weiteren Ansprüchen, der Beschreibung und den Zeichnungen.

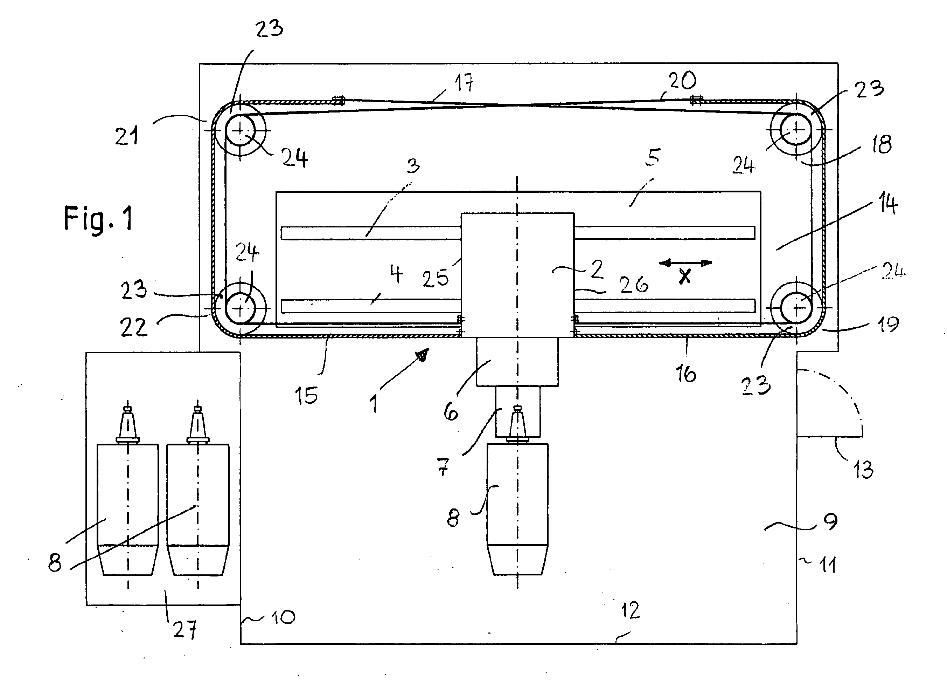

Die Erfindung wird anhand einiger in den Zeichnungen dargestellter Ausführungsbeispiele näher erläutert. Es zeigen
- Fig. 1 bis 3: jeweils in schematischen Darstellungen unterschiedliche Ausführungsformen von erfindungsgemäßen Werkzeugmaschinen mit einer Arbeitsraumabdeckung.

Fig. 1 zeigt in Draufsicht eine Werkzeugmaschine 1, die nur schematisch dargestellt ist. Sie hat einen in X-Richtung verfahrbaren Ständer 2, der längs zweier Führungsschienen 3, 4, die auf einem Maschinenbett 5 vorgesehen sind, verfahrbar ist. Am Ständer 2 ist ein in Z-Richtung verfahrbarer Schlitten 6 gelagert, der einen Spindelkopf 7 zur Aufnahme eines Werkzeuges 8 aufweist. Der Schlitten 6 mit dem Spindelkopf 7 liegt in einem vor der Werkzeugmaschine 1 befindlichen Arbeitsraum 9, der durch Seitenwände 10, 11 und eine Vorderwand 12 begrenzt ist. In einer der Wände, im Ausführungsbeispiel in der Seitenwand 11, ist eine Tür 13 vorgesehen, über die eine Bedienungsperson den Arbeitsraum 9 betreten kann.

Der Arbeitsraum 9 ist von einem Rückraum 14, in dem das Maschinenbett 5 sowie der Ständer 2 untergebracht sind, durch zwei Abdekkungen 15 und 16 getrennt, die mit ihren einander zugewandten Enden am Ständer 2 befestigt sind. Die Abdeckungen 15, 16 können durch Lamellen gebildet sein. Selbstverständlich können die Abdekkungen 15, 16 auch jede andere geeignete Ausbildung haben.

Die in Fig. 1 linke Abdeckung 15 ist etwa in Höhe der Seitenwand 10 des Arbeitsraumes 9 rechtwinklig in den Rückraum 14 umgelenkt. Mit Abstand von dieser Umlenkstelle ist die Abdeckung 15 erneut rechtwinklig umgelenkt. Das freie Ende der Abdeckung 15 ist mit wenigstens einem Zugteil 17, vorzugsweise mit mehreren übereinander liegenden Zugteilen, verbunden, der sich innerhalb des Rückraumes 14 bis zu einer weiteren Umlenkstelle 18 erstreckt, an der das Zugteil 17 rechtwinklig zu einer etwa in Höhe der Seitenwand 11 des Arbeitsraumes 9 liegenden Umlenkstelle 19 umgelenkt wird. An der Umlenkstelle 19 wird das Zugteil 17 rechtwinklig zum Ständer 2 umgelenkt, an dem das andere Ende des Zugteiles 17 befestigt ist.

Entsprechend ist die in Fig. 1 rechte Abdeckung 16 an den Umlenkstellen 18 und 19 jeweils rechtwinklig umgelenkt. Im Rückraum 14 ist mit Abstand von der Umlenkstelle 18 die Abdeckung 16 mit wenigstens einem Zugteil 20 verbunden, das über die Umlenkstellen 21 und 22 jeweils rechtwinklig umgelenkt ist. An der Umlenkstelle 22 wird das Zugteil 20 zum Ständer 2 umgelenkt, an dem es befestigt ist. Im Rückraum 14 kreuzen mit Abstand hinter der Werkzeugmaschine 1 die beiden Zugteile 17 und 20 einander, in Draufsicht gemäß Fig. 1 gesehen. Dadurch wird erreicht, daß die Zugteile 17, 20 jeweils hinter den Abdeckungen 15, 16 im Rückraum 14 geschützt verlaufen.

An den Umlenkstellen 18, 19, 21, 22 sind jeweils Umlenkrollen 23 mit größerem Durchmesser zur Umlenkung der Abdeckungen 15, 16 sowie Umlenkrollen 24 mit kleinerem Durchmesser zur Umlenkung der Zugteile 17, 20 vorgesehen. Die Umlenkrollen 23, 24 liegen jeweils auf der gleichen Achse. Je nach Zahl der Zugteile 17, 20 sind mehrere Umlenkrollen 24 übereinander angeordnet. Vorteilhaft werden auch für die Abdeckungen 15, 16 wenigstens zwei mit Abstand übereinander liegende Umlenkrollen 23 vorgesehen.

Wird der Ständer 2 in X-Richtung verfahren, nimmt er die beiden Abdeckungen 15, 16, deren Länge konstant ist, mit. Die Gesamtlänge der Abdeckungen 15 und 16 ist so gewählt, daß bei jeder Stellung des Ständers 2 in X-Richtung der Arbeitsraum 9 vom Rückraum 14 durch die Abdeckungen 15, 16 getrennt ist. Wird der Ständer 2 beispielsweise in Fig. 1 nach links verschoben, wird die Abdeckung 16 mitgenommen, so daß deren wirksame Länge im Arbeitsraum zunimmt, während in gleichem Maße die wirksame Länge der Abdekkung 15 verringert wird. Da jede Abdeckung 15, 16 über das Zugteil 17, 20 mit dem Ständer 2 verbunden ist, stehen die Abdeckungen 15, 16 jeweils unter Zugspannung, so daß die Abdeckungen 15, 16 beim Verfahren des Ständers 2 zuverlässig mitgenommen werden. Aufgrund der beschriebenen Umlenkung ist das eine Ende der Abdekkung 15 auf der einen Seite 25 des Ständers 2 und das eine Ende des mit der Abdeckung 15 verbundenen Zugteiles 17 an der gegenüberliegenden Seite 26 des Ständers 2 befestigt. Entsprechend ist das eine Ende der Abdeckung 16 an der Gestellseite 26 und das eine Ende des mit der Abdeckung 16 verbundenen Zugteiles 20 an der gegenüberliegenden Gestellseite 25 befestigt. Die beiden Abdeckungen 15, 16 mit den zugehörigen Zugteilen 17, 20 bilden zwei voneinander unabhängige Einheiten, die jeweils zusammen mit dem Ständer 2 einen geschlossenen Kreis ergeben.

Im Bereich neben dem Arbeitsraum 9 befindet sich ein Magazin 27 für verschiedene Werkzeuge 8, die in bekannter Weise in den Spindelkopf 7 mit (nicht dargestellten) Werkzeugwechseleinrichtungen eingewechselt werden können.

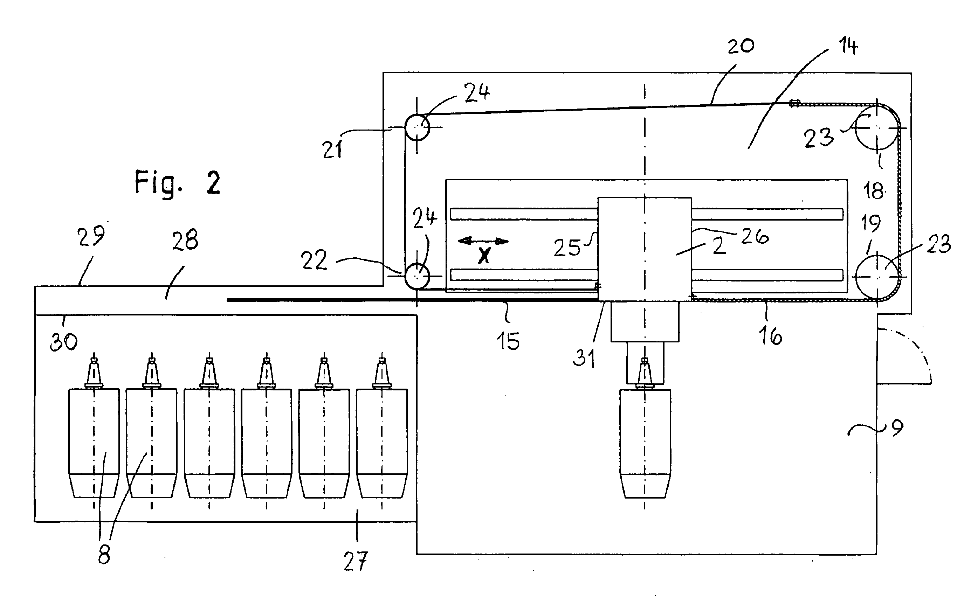

Bei der Ausführungsform gemäß Fig. 2 ist lediglich die Abdeckung 16 mit dem Zugteil 20 verbunden, das mit einem Ende an der Seite 25 des Ständers 2 befestigt ist. Die Abdeckung 16 ist ihrerseits an der Seite 26 des Ständers 2 befestigt. Entsprechend der vorherigen Ausführungsform wird die Abdeckung 16 an den Umlenkstellen 18, 19 umgelenkt. Für das Zugteil 20 sind die Umlenkstellen 21, 22 vorgesehen. Im Ausführungsbeispiel werden die Umlenkstellen 18, 19 durch Umlenkrollen 23 gebildet, die größeren Durchmesser haben als die gegenüberliegenden Umlenkrollen 24 für das Zugteil 20. Die Abdeckung 16 mit dem Zugteil 20 und dem Ständer 2 bildet wiederum einen geschlossenen Kreis.

Die an die Ständerseite 25 anschließende Abdeckung 15 ist als ebene Wand ausgebildet, die beim Verfahren des Ständers 2 in X-Richtung lediglich in ihrer Längsrichtung verschoben wird. Eine Umlenkung der Abdeckung 15 findet nicht statt. Darum muß die Abdekkung 15 auch nicht flexibel ausgebildet sein wie die Abdeckung 16, die an den Umlenkstellen 18, 19 jeweils rechtwinklig umgelenkt wird. Für die Abdeckung 15 ist ein schmaler Aufnahmeraum 28 vorgesehen, der so lang ist, daß die Abdeckung 15 in ihm untergebracht werden kann, wenn sich der Ständer 2 in seiner in Fig. 2 linken Endstellung befindet. Der Aufnahmeraum 28 wird durch zwei Wände 29, 30 begrenzt, die hinter dem Werkzeugmagazin 27 vorgesehen sind. Da die Abdeckung 15 nur geringe Dicke hat, kann der Aufnahmeraum 28 entsprechend schmal ausgebildet sein, so daß für ihn nur wenig Raum notwendig ist.

Wird der Ständer 2 in X-Richtung verfahren, dann wird die Abdekkung 16 über das Zugteil 20 entsprechend mitgenommen. Die am Ständer 2 befestigte Abdeckung 15 wird entsprechend verschoben. Sie ist so lang, daß sie den Arbeitsraum 9 vom Rückraum 14 auch dann trennt, wenn der Ständer 2 in Fig. 2 seine rechte Endlage einnimmt.

Im übrigen ist die Ausführungsform nach Fig. 2 gleich ausgebildet wie das Ausführungsbeispiel nach Fig. 1. Das Werkzeugmagazin 27 ist lediglich im Vergleich zur vorigen Ausführungsform in X-Richtung länger, so daß im Werkzeugmagazin eine größere Zahl von Werkzeugen 8 als bei der vorigen Ausführungsform untergebracht werden kann. Das Ausführungsbeispiel nach Fig. 2 zeichnet sich durch seine einfache konstruktive Gestaltung aus, die dennoch eine zuverlässige Abdichtung des Arbeitsraumes 9 gegenüber dem Rückraum 14 sicherstellt. Entsprechend der vorhergehenden Ausführungsform sind die Abdeckungen 15, 16 an dem dem Arbeitsraum 9 zugewandten Rand der Ständerseiten 25, 26 befestigt, so daß die dem Arbeitsraum zugewandte Stirnseite 31 des Ständers 2 mit den entsprechenden Seitenflächen der Abdeckungen 15, 16 in einer gemeinsamen Ebene liegt.

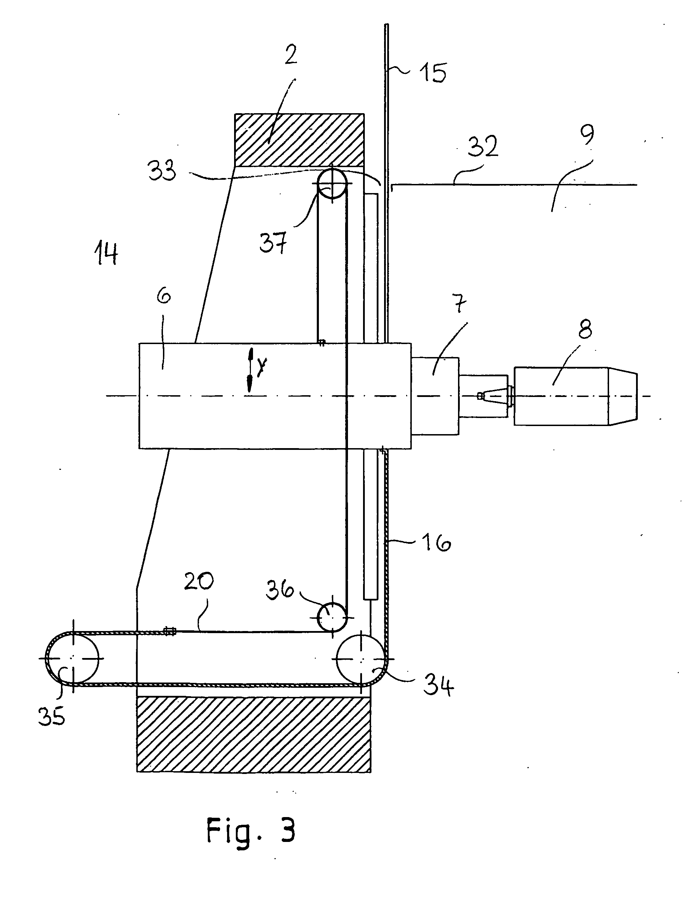

Fig. 3 zeigt die Möglichkeit, die Abdeckungen 15, 16 nicht nur horizontal verschiebbar, sondern auch vertikal verschiebbar vorzusehen. Die obere Abdeckung 15 ist entsprechend der Ausführungsform gemäß Fig. 2 starr ausgebildet. Sie ist im Bereich vor dem portalartig ausgebildeten Ständer 2 am Schlitten 6 befestigt und ragt nach oben über eine den Arbeitsraum 9 nach oben abschließende Wand 32. Eine solche Wand kann im übrigen auch bei den Ausführungsformen nach den Fig. 1 und 2 vorgesehen sein. Zwischen dem Ständer 2 und der Wand 32 verbleibt ein schmaler Spalt 33, durch den die Abdekkung 15 nach oben ragt.

Auf der gegenüberliegenden Seite ist am Schlitten 6 das eine Ende der flexibel ausgebildeten Abdeckung 16 befestigt. Sie verläuft vom Schlitten 6 aus nach unten zur Umlenkstelle 34, die durch eine Umlenkrolle gebildet wird, die in der Portalöffnung am Ständer 2 um eine horizontale Achse drehbar gelagert ist und mit welcher die Abdekkung 16 rechtwinklig nach innen in den Ständer 2 umgelenkt wird.
Die Umlenkrolle 34 steht geringfügig in Richtung auf den Arbeitsraum 9 über den Ständer 2 vor. Mit Abstand hinter der Umlenkrolle 34 befindet sich eine weitere Umlenkrolle 35, an welcher die Abdeckung 16 um 180° umgelenkt wird. Im Bereich zwischen dieser Umlenkrolle 35 und einer weiteren Umlenkrolle 36 ist das Ende der Abdeckung 16 mit dem Zugteil 20 verbunden, das über die im Durchmesser kleinere Umlenkrolle 36 rechtwinklig nach oben umgelenkt ist. Die Umlenkrolle 36 liegt mit geringem Abstand zur Umlenkrolle 34 innerhalb des Ständers 2, an dem sie drehbar gelagert ist. Das Zugteil 20 verläuft von der unteren Umlenkrolle 36 innerhalb des Ständers 2 nach oben zu einer weiteren Umlenkrolle 37, die ebenso wie die Umlenkrolle 36 um eine horizontale Achse drehbar gelagert ist. An ihr wird das Zugteil 20 um 180° zum Schlitten 6 umgelenkt, an dem das Zugteil 20 mit seinem anderen Ende befestigt ist. Wird der Schlitten 6 in Y-Richtung im Ständer 2 verfahren, wird die untere Abdeckung 16 entsprechend über das Zugteil 20 mitgenommen, das zusammen mit dem Schlitten 6 und der Abdeckung 16 einen geschlossenen Kreis bildet. Die obere Abdeckung 15 wird je nach Verfahrrichtung des Schlittens 6 nach oben oder nach unten verschoben. Sie ist so lang, daß der Arbeitsraum 9 auch in der untersten Stellung des Schlittens 6 gegenüber dem Rückraum 14 bzw. dem Portalquerschnitt des Ständers 2 abgedeckt ist. Je nach Breite der Abdeckung 16 senkrecht zur Y-Richtung sind mehrere Zugteile 20 und dementsprechend mehrere jeweils gleichachsig zueinander liegende Umlenkrollen vorgesehen. Diese Ausführungsform ist für solche Werkzeugmaschinen vorgesehen, bei denen der Ständer 2 portalförmig ausgebildet ist und der Schlitten 6 durch den Ständer 2 sich erstreckt. In diesem Falle decken die beiden Abdeckungen 15, 16 den Innenquerschnitt des Ständers 2 gegen den Arbeitsraum 9 ab. Die Abdeckung 16 mit dem Zugteil 20 ist im wesentlichen innerhalb des Ständers 2 untergebracht und nimmt dadurch nur wenig Raum in Anspruch. Selbstverständlich kann auch die Abdeckung 15 oberhalb des Schlittens 6 flexibel sein und auf gleiche Weise wie die untere Abdeckung 16 umgelenkt und durch Zugelemente mit dem Schlitten 6 verbunden sein.

## Patentansprüche

1. Werkzeugmaschine mit einem Maschinenbett (5) und einem verfahrbaren Ständer (2), an dem beiderseits je eine Abdeckung (15, 16) befestigt ist, wobei die Abdeckungen (15, 16) einen Arbeitsraum (9) von einem Rückraum (14) trennen, beim Verfahren des Ständers (2) von ihm mitgenommen werden und von denen zumindest eine Ab-deckung (15, 16) im Rückraum (14) mit dem einen Ende wenigstens eines Zugteiles (17, 20) verbunden ist,
**dadurch gekennzeichnet, dass** das Zugteil (17, 20) mit seinem anderen Ende am Ständer (2) befestigt ist.

2. Werkzeugmaschine nach Anspruch 1,
**dadurch gekennzeichnet, dass** das Zugteil (17, 20) mit seinem anderen Ende und die zugehörige Abdeckung (15, 16) an in Verfahrrichtung (X) einander gegenüberliegenden Seiten (25, 26) des Ständers (2) befestigt sind.

3. Werkzeugmaschine nach Anspruch 1 oder 2,
**dadurch gekennzeichnet, dass** beide Abdeckungen (15, 16) mit jeweils einem Zugteil (17, 20) verbunden sind.

4. Werkzeugmaschine nach Anspruch 3,
**dadurch gekennzeichnet, dass** die Abdeckungen (15, 16) und die zugehörigen, vorteilhaft im Rückraum (14) einander kreuzenden Zugteile (17, 20) an in Verfahrrichtung (X) einander gegenüberliegenden Seiten (25, 26) des Ständers (2) befestigt sind.

5. Werkzeugmaschine nach einem der Ansprüche 1 bis 4,
**dadurch gekennzeichnet, dass** die Abdeckungen (15, 16) flexibel ausgebildet sind.

6. Werkzeugmaschine nach Anspruch 1 oder 2,
**dadurch gekennzeichnet, dass** die andere Abdeckung (15) starr ausgebildet ist und sich vom Ständer (2) aus in Verfahrrichtung (X) des Ständers (2) erstreckt.

7. Werkzeugmaschine nach einem der Ansprüche 1 bis 6,
**dadurch gekennzeichnet, dass** zumindest die eine Abdeckung (15, 16) und zumindest das eine Zugteil (17, 20) außerhalb des Arbeitsraumes (9) mehrfach umgelenkt sind und vorteilhaft mit dem Ständer (2) bzw. dem Schlitten (6) einen geschlossenen Kreis bilden.

## Claims

1. Machine tool with a machine bed (5) and a travelling column (2), at which on both sides respectively a cover (15, 16) is fixed, the covers (15, 16) separating a work space (9) from a back space (14), are carried along during the travelling of the column (2) by it and from the covers (15, 16) from which at least one is connected within the back space (14) with one end of at least one tie member (17, 20),
**characterised in that** the tie member (17, 20) is fixed with its other end at the column (2).

2. Machine tool according to claim 1,
**characterised in that** the tie member (17, 20) with its other end and the correspondent cover (15, 16) are fixed at sides (25, 26) of the column (2), opposed to each other in the direction of transfer (X).

3. Machine tool according to claim 1 or 2,
**characterised in that** both covers (15, 16) are connected with one tie member (17, 20) each.

4. Machine tool according to claim 3,
**characterised in that** the covers (15, 16) and the associated tie members (17, 20), advantageously crossing one another within the back space (14) are fixed at sides (25, 26) of the column (2), opposed to each other in the direction of transfer (X).

5. Machine tool according to one of the claims 1 to 4,
**characterised in that** the covers (15, 16) are flexibly configured.

6. Machine tool according to claim 1 or 2,
**characterised in that** the other cover (15) is configured rigidly and extends itself from the column (2) in the direction of transfer (X) of the column (2).

7. Machine tool according to one of the claims 1 to 6,
**characterised in that** at least one cover (15, 16) and at least one tie member (17, 20) are multiply deflected outside the work space (9) and advantageously form a closed loop with the column (2) respectively with the slide (6).

## Revendications

1. Machine-outil avec un socle de machine (5) et un montant (2) déplaçable dans lequel une couverture (15, 16) est fixée de chaque côté, les couvertures (15, 16) séparant une zone de travail (9) d'une zone arrière (14) et lors du transfert du montant (2) étant emmenées par celui-ci et desquelles au moins une couverture (15, 16) est connectée dans la zone arrière (14) avec l'une des extrémités d'au moins une pièce de tirage (17, 20),
**caractérisée en ce que** la pièce de tirage (17, 20) est fixée avec son autre extrémité au montant (2).

2. Machine-outil selon revendication 1,
**caractérisée en ce que** la pièce de tirage (17, 20) avec son autre extrémité et la couverture (15, 20) adjointe sont fixées dans des côtés (25, 26) du montant (2) opposés l'un par rapport à l'autre dans la direction de transfert (X).

3. Machine-outil selon revendication 1 ou 2,
**caractérisée en ce que** les deux couvertures (15, 16) sont connectées respectivement avec une pièce de tirage (17, 20).

4. Machine-outil selon revendication 3,
**caractérisée en ce que** les couvertures (15, 16) et les pièces de tirage (17, 20) adjointes, se croisant l'un l'autre, avantageusement dans la zone arrière (14) sont fixées dans des côtés (25, 26) du montant (2) opposés l'un par rapport à l'autre dans la direction de transfert (X).

5. Machine-outil selon une des revendications 1 à 4,
**caractérisée en ce que** les couvertures (15, 16) sont formées flexibles.

6. Machine-outil selon revendication 1 ou 2,
**caractérisée en ce que** l'autre couverture (15) est formée rigide et se projette en partant du montant (2) dans la direction de transfert (X) du montant (2).

7. Machine-outil selon une des revendications 1 à 6,
**caractérisée en ce qu'**au moins l'une couverture (15, 16) et au moins l'une pièce de tirage (17, 20) sont amenées à changer de direction à différentes reprises et forment avantageusement un circuit fermé avec le montant (2) respectivement le chariot (6).
